# EUROPÄISCHE PATENTSCHRIFT

(11) **EP 3 526 006 B1**
(45) Veröffentlichungstag und Bekanntmachung des Hinweises auf die Patenterteilung: **03.04.2024**
(21) Anmeldenummer: 17783832.3
(22) Anmeldetag: 11.10.2017
(51) Int. Cl.: B29C 48/92, B29C 48/10, B29C 48/88, B29C 48/08

(54) **VERFAHREN ZUR ÜBERWACHUNG EINER FOLIENQUALITÄT SOWIE FOLIENMASCHINE**
METHOD FOR MONITORING A FILM QUALITY AND FILM MACHINE
PROCÉDÉ DE SURVEILLANCE DE LA QUALITÉ D'UNE FEUILLE MINCE ET BOUDINEUSE

(30) Priorität: 11.10.2016 DE 102016119285
(43) Veröffentlichungstag der Anmeldung: 21.08.2019
(73) Patentinhaber: Windmöller & Hölscher KG, 49525 Lengerich (DE)
(72) Erfinder: SCHMITZ, Torsten, 49525 Lengerich (DE); FAUSTMANN, Daniel, 49124 Georgsmarienhütte (DE); GROEPPER, Bernd-Alexander, 48317 Drensteinfurt (DE)
(86) Internationale Anmeldenummer: PCT/EP2017/075955
(87) Internationale Veröffentlichungsnummer: WO 2018/069399

(56) Entgegenhaltungen:
- EP-A1- 1 616 687
- EP-A2- 0 917 945
- DE-A1-102014 119 206
- US-A- 5 288 441

## Beschreibung

Die Erfindung betrifft ein Verfahren zur Überwachung einer Folienqualität bei einer Herstellung einer Kunststofffolie sowie eine Folienmaschine mit einer Vorrichtung zur Überwachung einer Folienqualität bei einer Herstellung einer Kunststofffolie.

Aus dem Stand der Technik ist es bekannt, dass in einem Herstellungsprozess einer Kunststofffolie über eine Auslassvorrichtung fließfähiges Folienmaterial auf eine Transportvorrichtung, insbesondere eine Gießwalze, durch einen länglichen Auslassspalt abgegeben wird. Die Transportvorrichtung wird in der Regel gekühlt, sodass während einer Rotation und/oder Bewegung der Transportvorrichtung das Folienmaterial abgekühlt wird. Während der Abkühlung durchläuft das Folienmaterial ein Temperaturprofil und unterschreitet zu einem bestimmten Zeitpunkt seine eigene Erstarrungstemperatur, sodass es zur erstarren beginnt. Dadurch ist das Folienmaterial am Abnahmepunkt an der Transportvorrichtung vollständig zu einer Folienbahn erstarrt. Ähnliche Erstarrungsprozesse sind aus der Herstellung einer Blasfolie bekannt, bei welcher flüssiges Folienmaterial aus einem Blaskopf einer Extrusionsmaschine ausgeblasen wird, woraufhin das Folienmaterial abkühlt und erstarrt.

Es hat sich gezeigt, dass der genannte Herstellungsprozess, insbesondere der Produktionsprozess für eine Kunststofffolie, nur dann in der Qualität stabil ist, wenn die Qualitätsmerkmalsausprägungen der herzustellenden Folie nur zufällig streuen. Unter anderen sind mechanische Eigenschaften der Kunststofffolie ein Hauptqualitätsmerkmal. Zur Überprüfung der mechanischen Eigenschaften ist es aus dem Stand der Technik bekannt, eine Offlinequalitätskontrolle durchzuführen, das bedeutet, dass Labortests während dem Anfahren der Folienmaschine und/oder auch während des Herstellungsprozesses in definierten Abständen durchgeführt werden. Dabei wird eine Probe der hergestellten Folie genommen und anschließend im Labor eine entsprechende Materialprüfung durchgeführt. Damit wird die Einstellphase für die Herstellung der Folie sowie die Qualitätssicherung gewährleistet. Das jeweilige Probeentnehmen sowie der aufwendige Einstellvorgang und die Überprüfung der Qualität während des Herstellungsprozesses reichen jedoch häufig nicht aus bzw. führen jedoch oft zu einer reduzierten Gesamtqualität der Folie, zu einem hohen Aufwand hinsichtlich der Probeentnahme und nicht zuletzt zu einem hohen Ausschussmaterial bzw. einer großen Menge an sogenannter B-Ware.

Es ist ferner bekannt, eine Onlineüberwachung einer Folienqualität durchzuführen, wobei über die Position einer Frostlinie, an welcher das Folienmaterial erstarrt ist, auf die mechanischen Eigenschaften der verkaufsfertigen Folie geschlossen wird. Da die Position der Frostlinie jedoch erneut von diversen Prozessparametern abhängt, ist es wünschenswert, das Verfahren zur Überwachung einer Folienqualität weiter zu vereinfachen.

Die Schrift US 5,288,441 A zeigt eine Blasfolienextrusion, bei welcher eine Abgabe von Folienmaterial über eine Auslassvorrichtung erfolgt. In der Schrift EP 1 616 687 A1 sind ein Verfahren sowie eine Vorrichtung zur Produktionsüberwachung bei der Herstellung von Schlauchfolien, insbesondere von Blasextrusionsfolien offenbart. Die Schrift EP 0 917 945 A2 zeigt ein Verfahren zur Steuerung eines Schrumpfes einer Folie, welcher auf einer Walzenanordnung abkühlt.

Die Schrift DE 10 2014 119 206 A1 offenbart ein Verfahren für die Überwachung der Dehnfähigkeit bei der Herstellung von Stretchfolien in einem Gießfolienverfahren, aufweisend die Schritte: Bestimmen der Position einer Frostlinie, Ermitteln der Korrelation der bestimmten Position der Frostlinie sowie Vergleich der ermittelten Korrelation mit einer der zumindest einen Sollpositionen so zugeordneten Dehnfähigkeit des Vollmaterials.

Es ist daher Aufgabe der vorliegenden Erfindung voranstehende aus dem Stand der Technik bekannte Nachteile zumindest teilweise zu beheben. Insbesondere ist es die Aufgabe der vorliegenden Erfindung eine Überwachung einer Folienqualität in einfacher und kostengünstiger Art und Weise zu verbessern.

Die voranstehende Aufgabe wird gelöst durch ein Verfahren zur Überwachung einer Folienqualität mit den Merkmalen des Anspruches 1 sowie eine Folienmaschine mit einer Vorrichtung zur Überwachung einer Folienqualität mit den Merkmalen des Anspruches 13.

Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben worden sind, selbstverständlich auch im Zusammenhang mit der erfindungsgemäßen Folienmaschine und jeweils umgekehrt, sodass bzgl. der Offenbarung zu den einzelnen Erfindungsaspekten stets wechselseitig Bezug genommen wird bzw. werden kann.

Erfindungsgemäß weist das Verfahren zur Überwachung einer Folienqualität bei einer Herstellung einer Kunststofffolie folgende Schritte auf:
- Bestimmen einer ersten Temperatur eines Folienmaterials der Kunststofffolie während eines Transportes des Folienmaterials, bei welchem das Folienmaterial entlang einer Förderrichtung des Folienmaterials abkühlt,
- Bereitstellen einer temperaturabhängigen Definition einer Qualitätsbedingung der Folienqualität,
- Bewerten der ersten Temperatur des Folienmaterials anhand der temperaturabhängigen Definition der Qualitätsbedingung.

Durch das Bereitstellen der temperaturabhängigen Definition der Qualitätsbedingung ist das Verfahren damit insbesondere unabhängig von einer Position einer Frostlinie des Folienmaterials. Die Herstellung der Kunststofffolie kann z.B. eine Blasfolienherstellung oder eine Gießfolienherstellung sein. Dabei kann das Folienmaterial mittels einer Transportvorrichtung transportiert werden, um von einem Auslassmittel zu einer Weiterverarbeitungsvorrichtung zu gelangen. Vorzugsweise kann das Bestimmen der Temperatur des Folienmaterials der Kunststofffolie vor oder an der Transportvorrichtung erfolgen. Die Qualitätsbedingung kann vorteilhafterweise eine bestimmte Eigenschaft des Folienmaterials, wie z. B. eine Transparenz sein, die sich nach vollständigem Erstarren des Folienmaterials ergibt. Durch die temperaturabhängige Definition kann dabei insbesondere direkt aus der ersten Temperatur vorhergesagt werden, ob die Qualitätsbedingung erfüllt ist oder nicht. Die erste Temperatur kann dabei eine Temperatur sein, die an einer bestimmten Stelle der Transportvorrichtung des Folienmaterials gemessen wird. Ferner kann die erste Temperatur jedoch auch beispielsweise ein arithmetisches Mittel aus mehreren gemessenen Temperaturen oder ein Temperaturverlauf sein. Beim Bewerten der ersten Temperatur des Folienmaterials anhand der temperaturabhängigen Definition der Qualitätsbedingung kann damit beispielsweise die erste Temperatur rechnerisch verarbeitet werden, sodass sich ein Zusammenhang zwischen einer Eigenschaft der erstarrten Folie, welche die Qualitätsbedingung widerspiegelt und der ersten Temperatur ergibt. Das Bestimmen der ersten Temperatur kann vorzugsweise ein insbesondere messtechnisches Erfassen der ersten Temperatur aufweisen. Vorteilhafterweise kann das Bestimmen der ersten Temperatur durch eine Messung der Temperatur oder ein Modell erfolgen. So kann sich aus definierten Parametern des Herstellprozesses des Folienmaterials eine Vorhersage der ersten Temperatur ergeben, welche wiederum über die temperaturabhängige Definition eine Bewertung ermöglicht. Die temperaturabhängige Definition kann ferner über eine Abkühlgeschwindigkeit bzw. einen Temperaturgradienten, welcher sich aus der ersten Temperatur und/oder einer weiteren Temperatur ergibt auf eine bestimmte Eigenschaft des Folienmaterials schließen lassen.

Somit ist eine einfache Möglichkeit bereitgestellt, die Folienqualität bei der Herstellung einer Kunststofffolie zu überwachen, wobei aus der ersten Temperatur auf eine Qualitätsbedingung geschlossen werden kann. Die Temperatur stellt dabei einen leicht beeinflussbaren Prozessparameter dar, sodass beispielsweise durch Anpassung eines Vakuums bei der Extrusion des Folienmaterials oder eine Vortriebsgeschwindigkeit des Folienmaterials auf der Transportvorrichtung die Temperatur bzw. der Abkühlverlauf angepasst werden kann, sodass entsprechend auch die Eigenschaft, welche die Qualitätsbedingung widerspiegelt, für die fertige Kunststofffolie einstellbar ist.

Im Rahmen der Erfindung kann ferner vorgesehen sein, dass die temperaturabhängige Definition der Qualitätsbedingung ein Temperaturintervall aufweist, wobei das Bewerten der ersten Temperatur einen Vergleich des Temperaturintervalls und der ersten Temperatur umfasst. Das Temperaturintervall kann dabei aus einem Zusammenhang mit einer Eigenschaft der Kunststofffolie hergeleitet sein oder hergeleitet werden. Das Temperaturintervall kann insbesondere zwei Temperaturgrenzen aufweisen. Liegt die erste Temperatur innerhalb des Temperaturintervalls kann beispielsweise vorgesehen sein, dass die Qualitätsbedingung erfüllt ist und wenn die erste Temperatur außerhalb des Temperaturintervalls liegt, d. h. kleiner einer ersten Grenze oder größer einer zweiten Grenze ist, kann eine Veränderung des Prozesses der Herstellung der Kunststofffolie erforderlich sein, um die geforderte Qualitätsbedingung zu erfüllen. Das Temperaturintervall kann jedoch auch ein offenes Intervall sein, d. h. von 0 bis zu einer oberen Temperaturgrenze, von minus unendlich bis zu einer oberen Temperaturgrenze oder von einer unteren Temperaturgrenze bis unendlich definiert sein. Somit ist es durch einen einfachen Vergleich möglich, die erste Temperatur hinsichtlich der Qualitätsbedingung zu bewerten, ohne diese speziell zu verarbeiten und in eine Rechnung einzubinden. Dabei reicht insbesondere ein Abgleich, ob die erste Temperatur im Temperaturintervall liegt, um die erste Temperatur zu bewerten. Das Temperaturintervall kann somit beispielsweise in einer Steuereinheit abgespeichert sein und vor Beginn des Verfahrens zur Überwachung der Folienqualität berechnet sein oder für jede Bewertung der ersten Temperatur neu berechnet werden. Die temperaturabhängige Definition kann daher das Temperaturintervall und eine Modellierung umfassen, welche das Temperaturintervall mit einem geforderten Qualitätsmaß in Beziehung setzt.

Bei einem erfindungsgemäßen Verfahren ist ferner vorgesehen, dass die Qualitätsbedingung und/oder die temperaturabhängige Definition zumindest eine für die Weiterverarbeitung des Folienmaterials relevante Eigenschaft des Folienmaterials und/oder der Kunststofffolie berücksichtigt. Unter einer für die Weiterverarbeitung des Folienmaterials relevanten Eigenschaft des Folienmaterials kann beispielsweise eine mechanische Eigenschaft verstanden werden, wobei bei einer bestimmten mechanischen Eigenschaft zu einem bestimmten Zeitpunkt des Verfahrens bzw. zu einer bestimmten Position auf der Transportvorrichtung eine Festigkeit der Kunststofffolie folgt. Somit kann die mechanische Eigenschaft als Indikator für eine Beschaffenheit des herzustellenden Folienproduktes dienen oder eine Eigenschaft des herzustellenden Folienproduktes sein. Für die Weiterverarbeitung des Folienmaterials kann dabei insbesondere jede Eigenschaft des Folienmaterials und/oder der Kunststofffolie sein, welche das Ergebnis der Anwendung der Kunststofffolie beim Kunden beeinflussen kann. Somit kann die Weiterverarbeitung des Folienmaterials insbesondere die Weiterverarbeitung der Folie umfassen, welche das Folienmaterial aufweist bzw. welche aus dem Folienmaterial hergestellt ist. Daher ist die für die Weiterverarbeitung des Folienmaterials relevante Eigenschaft vorzugsweise eine für die Weiterverarbeitung der Kunststofffolie relevante Eigenschaft. Ferner kann die für die Weiterverarbeitung des Folienmaterials relevante Eigenschaft direkt eine Eigenschaft der Kunststofffolie sein, sodass beispielsweise über die temperaturabhängige Definition auf eine Eigenschaft, z.B. eine maximale Dehnfähigkeit, der Kunststofffolie geschlossen werden kann. Insbesondere kann die Qualitätsbedingung somit eine Zielgröße der für die Weiterverarbeitung des Folienmaterials relevanten Eigenschaft vorgeben. Die Zielgröße kann beispielsweise ein vorgegebener Wert der für die Weiterverarbeitung des Folienmaterials relevanten Eigenschaft sein, der mindestens erreicht werden muss, um die Qualitätsbedingung zu erfüllen. Ein Zusammenhang der Zielgröße der für die Weiterverarbeitung des Folienmaterials relevanten Eigenschaft mit einer Temperatur, insbesondere der ersten Temperatur, kann durch die temperaturabhängige Definition beschrieben sein. Daher kann insbesondere vorgesehen sein, dass die Qualitätsbedingung und die temperaturabhängige Definition zumindest eine für die Weiterverarbeitung des Folienmaterials relevante Eigenschaft des Folienmaterials und/oder der Kunststofffolie berücksichtigt.

Es ist ferner denkbar, dass bei einem erfindungsgemäßen Verfahren die temperaturabhängige Definition der Qualitätsbedingung zumindest eine Bestimmung der für die Weiterverarbeitung des Folienmaterials relevanten Eigenschaft in Abhängigkeit von der ersten Temperatur umfasst. So kann beispielsweise die erste Temperatur direkt verarbeitet werden und insbesondere über einen mathematischen Zusammenhang und/oder ein Modell zwischen der ersten Temperatur und der für die Weiterverarbeitung des Folienmaterials relevanten Eigenschaft ein voraussichtlicher Wert oder eine voraussichtliche Ausprägung der für die Weiterverarbeitung des Folienmaterials relevanten Eigenschaft berechnet bzw. modelliert werden. Dabei kann ein Eigenschaftsintervall vorgesehen sein, mit dem der errechnete Wert abgeglichen werden kann, wobei beispielsweise eine zu erwartende maximale Dehnfähigkeit der Kunststofffolie innerhalb bestimmter Intervallgrenzen liegt, wenn die Qualitätsbedingung erfüllt ist. Das Eigenschaftsintervall kann ebenso wie das Temperaturintervall auch ein offenes Intervall sein oder zwei Intervallgrenzen in Form von Eigenschaftswerten umfassen. Somit kann über ein Modell von der ersten Temperatur auf die für die Weiterverarbeitung des Folienmaterials relevante Eigenschaft geschlossen werden, wobei verschiedene weitere Prozessparameter berücksichtigbar sind, sodass das Eigenschaftsintervall insbesondere adaptiv anpassbar sein kann. Dadurch ergibt sich eine hohe Genauigkeit und die Möglichkeit einer Berücksichtigung von insbesondere stets aktuellen Umgebungsbedingungen des Verfahrens. Somit kann durch die temperaturabhängige Definition beispielsweise ein Intervall vorgegeben sein, in welchem die Qualitätsbedingung erfüllt ist, wenn eine bestimmte Modellierung in Abhängigkeit von der Temperatur zu einer Voraussage der für die Weiterverarbeitung des Folienmaterials relevanten Eigenschaft führt und die Voraussage, welche z.B. ein konkreter Wert oder Verlauf sein kann, in dem Intervall liegt.

Im Rahmen der Erfindung ist weiterhin denkbar, dass die für die Weiterverarbeitung des Folienmaterials relevante Eigenschaft eine mechanische Eigenschaft, insbesondere ein Spannungs-Dehnungs-Verhalten und/oder ein Verformungsverhalten und/oder ein Siegelverhalten, der Kunststofffolie umfasst. So kann die für die Weiterverarbeitung des Folienmaterials relevante Eigenschaft ein Spannungs-Dehnungs-Verhalten der Kunststofffolie umfassen. Es ist grundsätzlich erkannt worden, dass über die Temperatur zu einem bestimmten Prozesszeitpunkt bzw. an einer bestimmten Position des Prozesses auf eine mechanische Eigenschaft, wie Spannungs-Dehnungs-Verhalten, der Kunststofffolie geschlossen werden kann. Das Spannungs-Dehnungsverhalten der Kunststofffolie umfasst vorteilhafterweise z.B. eine Dehnfähigkeit. So ist beispielsweise ein entscheidender Faktor für eine hohe Dehnfähigkeit eine langsame Abkühlung, insbesondere von einer hohen Schmelztemperatur des Folienmaterials. Je langsamer die Abkühlung stattfindet, umso länger ist auch der Weg, den das fließfähige Folienmaterial auf der Oberfläche der Transportvorrichtung gemeinsam mit dieser durch die Rotation der Transportvorrichtung zurücklegt. Der Kontakt der Transportvorrichtung mit dem Folienmaterial wird auch als Kontaktlänge bezeichnet. Je nach Rotationsgeschwindigkeit ergibt sich somit an einer bestimmten Stelle der Transportvorrichtung eine höhere oder niedrigere Temperatur und damit eine längere oder kürzere Abkühlzeit. Die Dehnfähigkeit ist ferner ein Hauptqualitätsmerkmal einer Kunststofffolie. So ist beispielsweise eine definierte Dehnfähigkeit notwendig, um eine gewünschte Stretchverpackung auf einer Palette mit ausreichender Sicherheit gewährleisten zu können. Bei einer Stretchfolie wird diese häufig mittels Robotertechnik um eine Palette und die darauf angeordneten Produkte gewickelt und dabei stark verformt. Durch die elastische Verformung wirken Rückstellkräfte im Material, welche als Haltekräfte auf das Produkt auf der Palette wirken können und damit die gewünschte Stabilisierung erzielen. Somit kann es notwendig sein, dass eine Kunststofffolie ein Mindestmaß an Dehnfähigkeit aufweist und diese entsprechend garantiert werden kann.

Vorzugsweise kann die für die Weiterverarbeitung des Folienmaterials relevante Eigenschaft ein Verformungsverhalten der Kunststofffolie umfassen. Unter einem Verformungsverhalten der Kunststofffolie kann beispielsweise eine Durchstoßfestigkeit verstanden werden. Diese kann je nach Anwendung als wichtiges Qualitätsmerkmal beim Kunden interpretiert werden, so dass eine Möglichkeit, das Verformungsverhalten vorherzubestimmen von Vorteil ist.

Es ist ferner erfindungsgemäß, dass bei einem erfindungsgemäßen Verfahren die für die Weiterverarbeitung des Folienmaterials relevante Eigenschaft eine optische Eigenschaft des Folienmaterials und/oder der Kunststofffolie umfasst. Die optische Eigenschaft kann eine Transparenz umfassen. So kann es vom Kunden gewünscht sein, dass die mit der Kunststofffolie verpackten Produkte noch durch die Folie sichtbar sind und die Kunststofffolie zumindest nach dem Einwickeln eine Mindesttransparenz aufweist. Weitere denkbare optische Eigenschaften sind z.B. Glanz, Haze und/oder Klarheit. Trübe Folien können hier beispielsweise Vorteile in der Anwendung für Fensterbeschichtungen oder dergleichen bieten. Somit existiert eine Vielzahl unterschiedlicher Anwendungsmöglichkeiten für Kunststofffolien, bei denen optische Eigenschaften, insbesondere bei der Weiterverarbeitung, eine Rolle spielen. Eine frühzeitige Erkennung möglicher Defekte noch im Herstellungsprozess ist damit von Vorteil, um möglichst präzise die Qualitätsbedingung, vorzugsweise durch Anpassen von Produktionsbedingungen, zu erfüllen.

Im Rahmen der Erfindung ist es ferner vorgesehen, dass das Bestimmen der ersten Temperatur des Folienmaterials der Kunststofffolie an einer Transportvorrichtung erfolgt, insbesondere auf welcher das Folienmaterial entlang der Förderrichtung des Folienmaterials abkühlt. Vorzugsweise wird das Folienmaterial also auf der Transportvorrichtung und/oder durch die Transportvorrichtung entlang der Förderrichtung transportiert. Dabei kann das Bestimmen der ersten Temperatur des Folienmaterials auf der Transportvorrichtung durch Berührung des Folienmaterials mittels oder berührungslos eines Sensors erfolgen. Die Transportvorrichtung kann vorzugsweise eine Gießwalze eines Gießfolienverfahrens zur Herstellung von z.B. Stretchfolien oder weiteren Folien umfassen. Somit kann das Bestimmen der ersten Temperatur des Folienmaterials vorzugsweise an einer Gießwalze der Transportvorrichtung durchgeführt werden, da an der Gießwalze ein wesentlicher Teil des Abkühlvorgangs stattfinden kann. Alternativ kann die Transportvorrichtung einen Kalibrierkorb und/oder einen Abzug eines Blasfolienverfahrens umfassen. Dabei findet ein wesentlicher Teil des Abkühlvorgangs im Bereich der Transportvorrichtung und/oder vor der Transportvorrichtung statt. Daher kann in diesem Bereich auch vorteilhafterweise die Temperaturbestimmung erfolgen, um zuverlässige Aussagen über die Qualitätsbedingung treffen zu können. Insbesondere bei der Blasfolienherstellung kann daher die Temperaturbestimmung vorteilhafterweise vor dem Kalibrierkorb erfolgen, um eine hohe Genauigkeit in Bezug auf die Bewertung der Temperatur zu ermöglichen.

Bei einem erfindungsgemäßen Verfahren kann ferner vorgesehen sein, dass das Bestimmen der ersten Temperatur zumindest abschnittsweise in einer axialen Richtung quer zur Förderrichtung des Folienmaterials auf der Transportvorrichtung erfolgt. Die Transportvorrichtung, insbesondere eine Gießwalze, kann in einer Zylinderform ausgestaltet sein, welche um eine Rotationsachse drehbar gelagert ist. Dabei rotiert die in Zylinderform ausgestaltete Transportvorrichtung vorzugweise während des gesamten Verfahrens für den Transport und die Kühlung des auf der Oberfläche der Transportvorrichtung angeordneten Folienmaterials. Die Bestimmung der Temperatur erstreckt sich somit vorzugsweise zumindest über einen Abschnitt dieser axialen Richtung quer zur Förderrichtung des Folienmaterials. Bevorzugt wird die erste Temperatur punktuell oder kontinuierlich über die gesamte Länge der axialen Ausrichtung der Gießwalze bestimmt. Damit ist es möglich, zusätzliche Toleranzabweichungen zu erkennen und gegebenenfalls Qualitätsmängeln vorzubeugen. So kann z. B. durch eine verminderte Abdichtung in einer Vakuumbox, welche vorzugsweise im Prozess vor der Transportvorrichtung angeordnet ist, eine asymmetrische Verteilung der Temperatur die Folge sein. Dies würde entlang der axialen Erstreckung, also der Breite der Folienbahn, zu unterschiedlichen Dehnfähigkeiten führen. Solche asymmetrischen Effekte in Form einer inhomogenen Temperatur über die axiale Länge können dadurch erkannt und somit in einem Folgeschritt insbesondere behoben werden. Insbesondere kann zumindest eine Lineartraverse vorgesehen sein, um einer Sensoreinheit die Verstellung in axialer Richtung zu ermöglichen. Des Weiteren können mehrere Lineartraversen verknüpft sein, um Bewegungen weitere Raumrichtungen zu ermöglichen.

Es kann ferner vorgesehen sein, dass das Bestimmen der ersten Temperatur berührungslos, insbesondere durch eine Ultraschallmessung und/oder eine Infrarotmessung, erfolgt. Dabei sind ein oder mehrere Sensoren denkbar, die für die Temperaturbestimmung zum Einsatz kommen. Dies kann besonders vorteilhaft hinsichtlich einer berührungslosen Bestimmungsmöglichkeit sein. So kann beispielsweise aus Transmission, Absorption und/oder Reflektion der Ultraschallstrahlung ein entsprechender Rückschluss auf die Temperatur gezogen werden. Bei der Infrarotmessung ist es beispielsweise denkbar, dass ein Infrarotsensor oder eine Infrarotkamera eingesetzt wird, durch welche ein Bereich des Folienmaterials abdeckbar ist und somit eine Fülle an Daten in kurzer Zeit aufnehmbar ist, sodass der Bereich zu einem bestimmten Zeitpunkt hinsichtlich seiner Temperatur bewertbar ist. Insbesondere kann durch eine Infrarotmessung auch eine Visualisierung vereinfacht werden, da beispielsweise das Bild einer Infrarotkamera auf einfache Art und Weise einem Benutzer auf einem Display sichtbar gemacht werden kann.

Im Rahmen der Erfindung kann ferner vorgesehen sein, dass das Bestimmen der ersten Temperatur an zumindest einer ersten Bestimmungsposition durchgeführt wird. Die erste Bestimmungsposition kann eine feste oder eine variable Bestimmungsposition sein. Unter einer festen Bestimmungsposition kann dabei verstanden werden, dass die erste Bestimmungsposition in ihrer Positionierung im Prozess feststehend ist. Somit kann es sich um eine vordefinierte Position handeln, deren Positionsdaten, wie z.B. Koordinaten innerhalb einer Folienmaschine, einem Bediener oder einer Steuereinheit bekannt sind. So kann diese beispielsweise an einer bestimmten Stelle der Transportvorrichtung vorgesehen sein, sodass die Distanz zwischen der ersten Bestimmungsposition und einem Punkt, an welchem das Folienmaterial an die Transportvorrichtung übergeben wird, konstant ist. Ein Vorteil einer festen Bestimmungsposition liegt darin, dass diese in Bezug auf den Herstellungsprozess der Kunststofffolie konstant ist und die erfasste erste Temperatur somit auch einem bestimmten Punkt im Prozess zugeordnet werden kann. Dadurch kann das Bewerten der ersten Temperatur des Folienmaterials anhand der temperaturabhängigen Definition der Qualitätsbedingung erleichtert sein. So ergibt sich durch die feste Bestimmungsposition ein weiterer Parameter, für den es nicht notwendig ist, diesen in der temperaturabhängigen Definition zu berücksichtigen.

Im Rahmen der Erfindung ist ferner denkbar, dass die erste Bestimmungsposition während oder nach der Bestimmung der ersten Temperatur in einer axialen Richtung und/oder entlang einer Umfangsrichtung der Transportvorrichtung verändert wird. Insbesondere ist es ferner denkbar, dass die erste Bestimmungsposition entlang der Förderrichtung des Folienmaterials verändert wird. So ist beispielsweise denkbar, dass insbesondere bei der Blasfolien-Herstellung die Höhe der Bestimmungsposition relativ zum Untergrund verändert wird. Vorzugsweise entspricht die Umfangsrichtung der Transportvorrichtung zumindest im Wesentlichen der Förderrichtung des Folienmaterials. So kann die Transportvorrichtung, wie bereits zuvor beschrieben, bevorzugt eine Gießwalze aufweisen. Alternativ kann jedoch auch vorgesehen sein, dass die Umfangsrichtung der Transportvorrichtung quer zur Förderrichtung des Folienmaterials verläuft und/oder die axiale Richtung einer Achse, insbesondere parallel zur Förderrichtung, des Folienmaterials entspricht. So kann die Transportvorrichtung für den Einsatz bei einem Blasfolienverfahren geeignet sein. Wird die erste Bestimmungsposition während oder nach der Erfassung der ersten Temperatur dabei verändert, können unterschiedliche Punkte des Abkühlvorganges des Folienmaterials auf der Transportvorrichtung hinsichtlich der Temperatur überwacht werden und anschließend bewertet werden. Eine Streuung der Temperaturen an unterschiedlichen Stellen kann wiederum ebenfalls bewertet werden. So kann sich eine verbesserte Genauigkeit der Auswertung ergeben, da der Stichprobenumfang vergrößert ist und Messunsicherheiten durch die Veränderung der ersten Bestimmungspositionen ausgeglichen werden können, beispielsweise durch Bilden eines arithmetischen Mittels. Vorzugsweise wird die erste Bestimmungsposition während oder nach der Bestimmung der ersten Temperatur in der axialen Richtung und entlang der Umfangsrichtung der Transportvorrichtung verändert. Somit ergibt sich eine große Abdeckung unterschiedlicher Bereiche der Transportvorrichtung bzw. des Folienmaterials.

Vorteilhafterweise ist bei einem erfindungsgemäßes Verfahren vorgesehen, dass ein Erfassen einer zweiten Temperatur an zumindest einer zweiten, insbesondere festen, Bestimmungsposition durchgeführt wird, wobei die erste und die zweite Bestimmungsposition in axialer Richtung und/oder in Umfangsrichtung der Transportvorrichtung beabstandet sind. Insbesondere kann dabei die erste und die zweite Temperatur anhand der temperaturabhängigen Definition der Qualitätsbedingung bewertet werden. Dadurch kann die Genauigkeit des Verfahrens weiter erhöht sein, da die erste und die zweite Temperatur berücksichtigt werden können. Dabei können sich die erste und die zweite Bestimmungsposition unterscheiden. So ist es beispielsweise möglich zwei oder mehr feste Bestimmungspositionen vorzusehen, welche unterschiedliche Temperaturen oder Temperaturwerte entlang des Abkühlvorganges auf der Transportvorrichtung bestimmen. Dadurch kann die Aussage über den Zusammenhang der ersten Temperatur und der Qualitätsbedingung verbessert sein, da diverse Messunsicherheiten und/oder Umgebungsbedingungen die Bewertung weniger beeinflussen bzw. herausgemittelt werden können.

Es ist ferner erfindungsgemäß, dass bei einem erfindungsgemäßen Verfahren für jede Bestimmungsposition eine einzelne temperaturabhängige Definition einer Qualitätsbedingung der Folienqualität bereitgestellt und anhand der jeweiligen Temperatur an der jeweiligen Bestimmungsposition bewertet wird. Somit kann beispielsweise für jede Bestimmungsposition eine Temperatur bestimmt werden, und diese anhand eines Temperaturintervalls eingeordnet werden oder diese in ein Eigenschaftsintervall überführt werden, sodass die für die Weiterverarbeitung des Folienmaterials relevante Eigenschaft, insbesondere die mechanische Eigenschaft, der Kunststofffolie vorzugsweise direkt bewertet werden kann. Dadurch ist die Genauigkeit des Verfahrens weiter steigerbar, da auch durch diese Maßnahme der Stichprobenumfang weiter erhöht sein kann und gleichzeitig für jede Bestimmungsposition eine eigene Bewertung durchgeführt wird. Somit können für unterschiedliche Bestimmungspositionen unterschiedliche temperaturabhängige Definitionen vorgesehen sein, sodass für jeden Prozesszeitpunkt eine auf jeweilige Bestimmungsposition abgestimmte temperaturabhängige Definition bereitgestellt werden kann.

Im Rahmen der Erfindung ist ferner denkbar, dass auf Basis der Bewertung der ersten Temperatur ein Hinweis zur Veränderung eines Prozessparameters an einen Benutzer gegeben wird. So kann beispielsweise auf einem Display der Hinweis angezeigt werden, dass ein bestimmter Prozessparameter zu verändern ist, um die Qualitätsbedingungen zu erreichen oder zu verbessern. Der Prozessparameter kann dem Benutzer insbesondere automatisch vorgeschlagen werden. Es ist jedoch auch denkbar, um das Verfahren zu vereinfachen, dem Benutzer lediglich den Hinweis zu geben, dass die Qualitätsbedingung nicht erreicht wird oder verbesserbar ist und dieser selbstständig darauf reagiert. Wird der Prozessparameter jedoch bereits automatisch vorgeschlagen, ergibt sich der Vorteil, dass der Benutzer weniger Spielraum für Fehler hat und gleichzeitig seine Konzentration auf andere Arbeitsschritte richten kann, sodass es ausreichend ist, lediglich den Prozessparameter, wie vorgeschlagen, zu ändern.

Bei einem erfindungsgemäßen Verfahren kann ferner vorgesehen sein, dass auf Basis der Bewertung der ersten Temperatur ein Prozessparameter zur Herstellung der Kunststofffolie zur Anpassung der Folienqualität gesteuert und/oder geregelt wird. So kann der Prozessparameter, welcher zu verändern ist, von der Folienmaschine direkt aus der Bewertung der ersten Temperatur erkannt werden oder aufgrund einer vorgegebenen Stellgröße schon zu Beginn des Verfahrens festgelegt sein. So kann insbesondere aufgrund der temperaturabhängigen Definition der Qualitätsbedingung oder einer Definition zur Beschreibung des Prozessparameters in den Prozess eingegriffen werden und damit die Qualität der Kunststofffolie gesteigert werden. So kann insbesondere durch eine Steuereinheit ein Regelkreis gebildet sein, welcher den Prozessparameter so lange regelt, bis über die Bestimmung der ersten Temperatur und die Bewertung der ersten Temperatur anhand der temperaturabhängigen Definition die Qualitätsbedingung erfüllt wird oder verbessert ist. Vorzugsweise wird bei Steuerung und/oder Regelung des Prozessparameters ein Vakuum zur Herstellung des Folienmaterials verändert. Dazu kann insbesondere eine Vakuumbox der Folienmaschine gezielt angesteuert werden.

Bei Herstellung einer Blasfolie kann der Prozessparameter z.B. einen Parameter eines Kühlluftstroms zur Kühlung des Folienmaterials und/oder einer Extrusionsvorrichtung des Folienmaterials, umfassen. Insbesondere kann der Prozessparameter ein zugeführtes Kühlluftvolumen pro Zeit und/oder eine Kühllufttemperatur des Kühlluftstroms und/oder eine Höheneinstellung einer Kalibriervorrichtung umfassen. Vorzugsweise kann bei der Blasfolienherstellung das Folienmaterial eine kreisförmige oder elliptische Ausformung während des Transportes annehmen, wobei der Parameter des Kühlluftstroms vorzugsweise über den Umfang regelbar sein kann. Ferner ist es denkbar, dass zwei Regelkreise vorgesehen sind, wobei der erste Regelkreis eine Regelung eines Parameters der Sensoreinheit, insbesondere eine Regelung einer Positionierung der Sensoreinheit, und der zweite Regelkreis eine Regelung eines weiteren Prozessparameter bei der Herstellung der Kunststofffolie umfassen kann.

Es ist ferner denkbar, dass bei einem erfindungsgemäßen Verfahren die für die Weiterverarbeitung des Folienmaterials relevante Eigenschaft und/oder die erste Temperatur und/oder die temperaturabhängige Definition über eine Displayeinheit angezeigt wird. Dies kann einem Benutzer zu jedem Zeitpunkt des Verfahrens ermöglichen, die aktuellen Prozessdaten zu überprüfen. Dabei kann sich gleichzeitig eine Lernfunktion ergeben, da der Benutzer mit zunehmender Erfahrung bestimmte Zusammenhänge zwischen der für die Weiterverarbeitung des Folienmaterials relevanten Eigenschaft, der ersten Temperatur und der temperaturabhängigen Definition beispielsweise zu unterschiedlichen Umweltbedingungen, wie der Umgebungstemperatur oder ähnlichem, erkennen kann. Weiterhin kann der Benutzer jederzeit in das Verfahren eingreifen, wenn er beispielsweise eine Fehlfunktion entdeckt.

Erfindungsgemäß kann ferner vorgesehen sein, dass bevor der eigentliche Herstellungsprozess der Kunststofffolie gestartet wird, ein Justierungsprozess so lange durchgeführt wird, bis die Bewertung der erfassten Temperatur des Folienmaterials der Qualitätsbedingung genügt. Dadurch kann beispielsweise für einen spezifischen Kunden die Qualitätsbedingung eingestellt werden, bevor das verkaufsfertige Produkt freigegeben wird. So kann während der Justierungszeit Ausschuss produziert werden, welcher den Qualitätsbedingungen des Kunden nicht genügt. Insbesondere kann der Justierungsprozess 5 Minuten bis 80 Minuten oder 1 Stunde bis 5 Stunden betragen. Während des Justierungsprozesses kann beispielsweise ein Mittelwert, eine minimale und eine maximale für die Weiterverarbeitung des Folienmaterials relevante Eigenschaft, insbesondere mechanische Eigenschaft, bestimmt werden und anschließend alle neu ermittelten Werte zu diesem Wert ins Verhältnis gesetzt werden. Ab diesem Zeitpunkt kann ferner eine Trendfunktion für die Überwachung des Herstellprozesses der Kunststofffolie erzeugt werden, die sich auch einem Verhältnis aus aktueller Eigenschaft und dem zuvor ermittelten Mittelwert zusammensetzt. Solange dieses Verhältnis sich in den zuvor ermittelten Grenzen, Mindestwert und Maximalwert der mechanischen Eigenschaft, bewegt, können alle produzierten Folien folglich als A-Ware bewertet werden. Werden die beschriebenen Grenzen verletzt, ist es denkbar, dass die entsprechende Folie als B-Ware erkannt wird.

Im Rahmen der Erfindung ist ferner denkbar, dass nach dem Justierungsprozess ein Kalibrierungsprozess durchgeführt wird, wobei die temperaturabhängige Definition der Qualitätsbedingung ermittelt oder neu ermittelt wird. Somit können beispielsweise detaillierte Prozessgrenzen der Prozessparameter ermittelt werden, während der Kalibrierungsvorgang durchgeführt wird. Während des Kalibrierungsprozesses kann eine Steuerung und/oder Regelung erfolgen, um die temperaturabhängige Definition zu ermitteln. So kann beispielsweise vorgesehen sein, dass verschiedene Messungen während des Kalibrierungsprozesses durchgeführt werden auf Grundlage derer bestimmte Umgebungseinflüsse, welche beispielsweise in Konstanten innerhalb der Bestimmung der temperaturabhängigen Definition, berücksichtigt werden können. Im Rahmen des Kalibrierungsprozesses kann insbesondere vorgesehen sein, dass eine Probe der Folie entnommen wird und insbesondere in einem Labor hinsichtlich der Qualitätsbedingung geprüft wird, so dass aus den daraus gewonnen Daten und Zusammenhängen die temperaturabhängige Definition ermittelt oder neu ermittelt werden und insbesondere damit bereitgestellt werden kann.

Gemäß einem weiteren Aspekt der Erfindung ist eine Folienmaschine mit einer Vorrichtung zur Überwachung einer Folienqualität bei einer Herstellung einer Kunststofffolie, insbesondere einer Blasfolienherstellung oder einer Gießfolienherstellung, beansprucht. Dabei weist die Folienmaschine ein Auslassmittel auf, welches dazu ausgebildet ist, Folienmaterial der Kunststofffolie, insbesondere in Form einer Schmelzefahne, an insbesondere auf, eine Transportvorrichtung abzugeben, sodass das Folienmaterial vor und/oder auf der Transportvorrichtung abkühlt. Ferner weist die Folienmaschine eine Sensoreinheit zur Erfassung einer ersten Temperatur des Folienmaterials vor oder an der Transportvorrichtung und eine Steuereinheit zum Bereitstellen einer temperaturabhängigen Definition einer Qualitätsbedingung der Folienqualität und zum Bewerten der ersten Temperatur des Folienmaterials anhand der temperaturabhängigen Definition der Qualitätsbedingung auf. Insbesondere ist dabei die Steuereinheit zum Ausführen des Verfahrens nach einem der vorhergehenden Ansprüche ausgebildet. Die Schmelzfahne kann dabei ein Abschnitt des insbesondere kontinuierlich abgegebenen Folienmaterials sein, welcher zumindest teilweise noch flüssig ist und aus dem Auslassmittel heraustritt, um auf die Transportvorrichtung abgegeben zu werden. Insbesondere kann die Steuereinheit zum Ausführen eines erfindungsgemäßen Verfahrens, wie zuvor beschrieben, ausgebildet sein. Damit bringt die erfindungsgemäße Folienmaschine die gleichen Vorteile mit sich, wie sie bereits ausführlich in Bezug auf ein erfindungsgemäßes Verfahren beschrieben worden sind.

Weitere, die Erfindung verbessernde Maßnahmen ergeben sich aus der nachfolgenden Beschreibung zu einigen Ausführungsbeispielen der Erfindung, welche in den Figuren schematisch dargestellt sind. Sämtliche aus den Ansprüchen, der Beschreibung oder der Zeichnungen hervorhergehende Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein. Dabei ist zu beachten, dass die Figuren nur beschreibenden Charakter haben und nicht dazu gedacht sind, die Erfindung in irgendeiner Form einzuschränken. Es zeigen:
- Fig. 1: eine erfindungsgemäße Folienmaschine zur Ausführung eines erfindungsgemäßen Verfahrens in einem ersten Ausführungsbeispiel in schematischer Ansicht,
- Fig. 2: eine erfindungsgemäße Folienmaschine zur Ausführung eines erfindungsgemäßen Verfahrens in einem weiteren Ausführungsbeispiel in schematischer Ansicht,
- Fig. 3: ein schematisches Diagramm mit einer temperaturabhängigen Definition in einem weiteren Ausführungsbeispiel,
- Fig. 4: ein schematisches Diagramm mit einer temperaturabhängigen Definition in einem weiteren Ausführungsbeispiel,
- Fig. 5: eine Transportvorrichtung in schematischer Draufsicht in einem weiteren Ausführungsbeispiel,
- Fig. 6: eine Transportvorrichtung in schematischer Draufsicht in einem weiteren Ausführungsbeispiel,
- Fig. 7: ein Temperaturverlauf als schematisches Diagramm in einem weiteren Ausführungsbeispiel und
- Fig. 8: ein Temperaturverlauf in einem schematischen Diagramm in einem weiteren Ausführungsbeispiel,
- Fig. 9: eine erfindungsgemäße Folienmaschine zur Ausführung eines erfindungsgemäßen Verfahrens in einem weiteren Ausführungsbeispiel in schematischer Ansicht.

In den nachfolgenden Figuren werden für die gleichen technischen Merkmale auch von unterschiedlichen Ausführungsbeispielen die identischen Bezugszeichen verwendet.

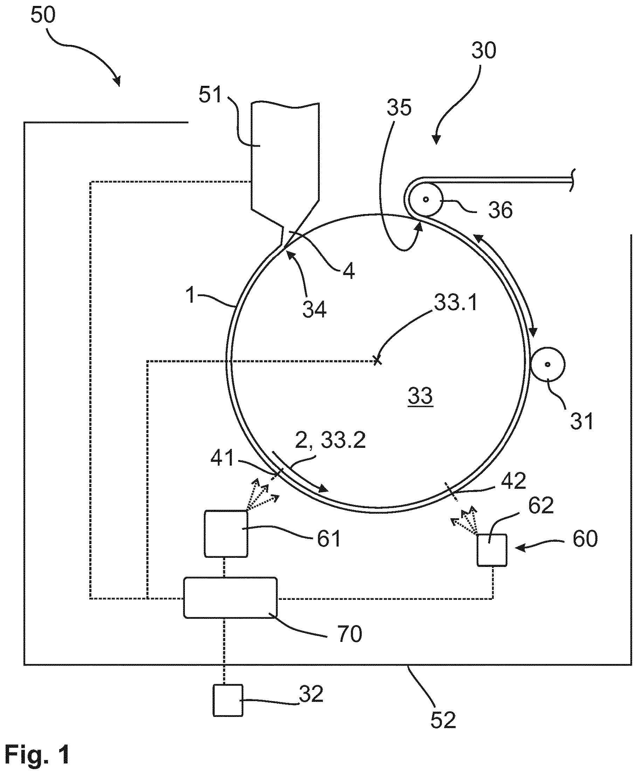

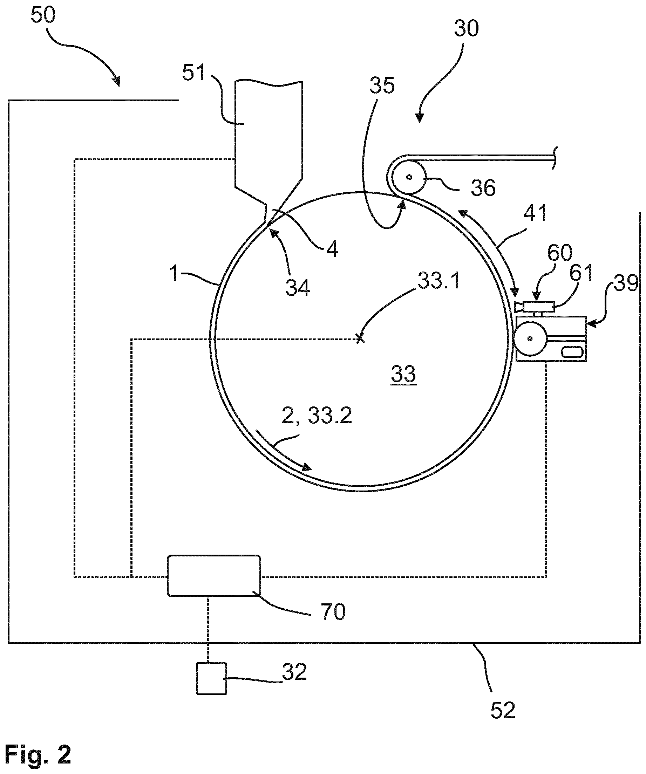

Die Figuren 1 und 2 zeigen zumindest einen Ausschnitt einer erfindungsgemäßen Folienmaschine 50 mit einer Vorrichtung zu Überwachung einer Folienqualität bei einer Herstellung, insbesondere einer Gießfolienherstellung, einer Kunststofffolie in einem ersten und einem zweiten Ausführungsbeispiel. Dabei weist die Folienmaschine 50 jeweils ein Auslassmittel 51 auf, aus welchem ein Folienmaterial 1 in Form einer Kunststoffschmelze auf eine Transportvorrichtung 30 gegeben werden kann. Die Transportvorrichtung 30 weist dabei eine Gießwalze 33 auf, welche dazu ausgebildet ist, entlang einer Förderrichtung 2, die eine Umfangsrichtung 33.2 der Gießwalze 33 ist, zu rotieren. Dabei wird das Folienmaterial 1, welches an einem Aufnahmeort 34 von der Gießwalze 33 aufgenommen, wird entsprechend gekühlt. Insbesondere kann die Gießwalze 33 dazu weitere Kühlmittel aufweisen. So kann die Gießwalze 33 beispielsweise von einer Kühlflüssigkeit durchflossen sein, sodass Wärme vom Folienmaterial 1 durch die Kühlflüssigkeit abtransportiert werden kann. Zwischen der Gießwalze 33 und dem Auslassmittel 51 entsteht am Aufnahmeort 34 eine Schmelzefahne 4, welche zumindest teilweise durch die Luft transportiert wird und dabei bereits eine erste Abkühlung erfährt. Ist das Folienmaterial vollständig abgekühlt, kann dieses an einem Abzugsort 35 von einer Abrisswalze 36 von der Gießwalze 33 abgenommen werden und somit entsprechend weiter verarbeitet werden, wobei das Folienmaterial 1 beispielsweise mittels einer Wickelvorrichtung aufgewickelt werden kann. Zusätzlich oder alternativ zur Abrisswalze 36 kann vorgesehen sein, dass das Folienmaterial 1 auf eine zweite Abkühlwalze (nicht dargestellt) geführt wird, um eine weitere Abkühlstufe zu realisieren. Insbesondere wird das Folienmaterial 1 nach dem Erstarren zu einer insbesondere verkaufsfertigen Kunststofffolie. Es hat sich herausgestellt, dass der Abkühlprozess, insbesondere im Rahmen der Transportvorrichtung 30, entscheidend für die Folienqualität der Kunststofffolie ist, sodass durch eine Überwachung an der Transportvorrichtung 30 zum Transport des Folienmaterials 1 Aussagen über die zur erwartende Folienqualität getroffen werden können. Insbesondere können dadurch dem Herstellprozess der Kunststofffolie nachgeordnete Prüfungen, welche das Folienmaterial 1 oder die Kunststofffolie zerstören, vermieden oder reduziert werden.

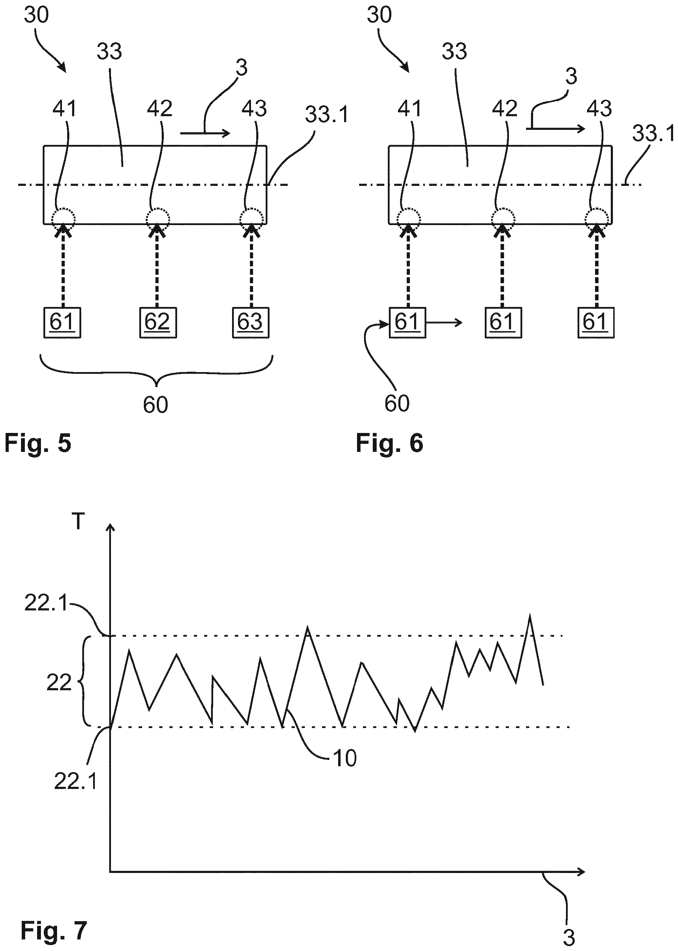

So zeigt Figur 1 im ersten Ausführungsbeispiel eine Sensoreinheit 60, welche dazu ausgebildet ist, eine erste Temperatur 10 an einer ersten Bestimmungsposition 41 und eine zweite Temperatur 11 an einer zweiten Bestimmungsposition 42 für das Folienmaterial 1 zu bestimmen. Dazu weist die Sensoreinheit 60 ein erstes Erfassungsmittel 61 und ein zweites Erfassungsmittel 62 auf, die jeweils an festen Positionen in Bezug auf ein Gestell 52 der Folienmaschine 50 angeordnet sind. Das erste und zweite Erfassungsmittel 61, 62 sind insbesondere dazu ausgebildet die Temperaturen 10, 11 des Folienmaterials 1 berührungslos zu bestimmen. So können das erste und das zweite Erfassungsmittel 61, 62 beispielsweise einen Ultraschallsensor und/oder eine Infrarotkamera aufweisen, um die Temperaturen 10, 11 an den Bestimmungspositionen 41, 42 zu erfassen. Die Sensoreinheit 60 ist ferner mit einer Steuereinheit 70 verbunden, welche eine temperaturabhängige Definition 20 einer Qualitätsbedingung der Folienqualität der herzustellenden Kunststofffolie bereitstellt. Dabei ist die Steuereinheit 70 ferner mit einer Displayeinheit 32 verbunden, welche einem Benutzer die erste und zweite Temperatur 10, 11 sowie Daten der temperaturabhängigen Definition 20 und/oder der Qualitätsbedingung anzeigen kann. Dabei kann ferner ein Bewerten der ersten und/oder zweiten Temperatur 10, 11 des Folienmaterials 1 anhand der temperaturabhängigen Definition 20 durch die Steuereinheit 70 oder einen Bediener, welcher die Displayeinheit 32 einsieht, vorgenommen werden. Obwohl hier die vorteilhafte Erfassung zweier Temperaturen 10, 11 dargestellt ist, kann es ausreichen, wenn insbesondere lediglich die erste Temperatur 10 erfasst und verarbeitet wird. Besonders bevorzugt wird dabei die Bewertung automatisch durch die Steuereinheit 70 vorgenommen, sodass ein Prozessparameter zur Herstellung der Kunststofffolie zur Anpassung der Folienqualität gesteuert und/oder geregelt werden kann. So kann die Steuereinheit 70 beispielsweise mit der Gießwalze 33 in Kommunikationsverbindung stehen, um die Geschwindigkeit, mit welcher die Gießwalze 33 dreht und damit das Folienmaterial 1 entlang der Förderrichtung 2 bewegt wird, angepasst werden kann. Zusätzlich oder alternativ ist es ferner denkbar, dass die Steuereinheit 70 mit dem Auslassmittel 51 oder einer weiteren Komponente der Folienmaschine 50 in Kommunikationsverbindung steht, sodass beispielsweise die Menge des zum fördernden Folienmaterials 1 angepasst werden kann. Ferner kann die Steuereinheit 70 auch mit einer Putzwalze 31 der Transportvorrichtung 30 in Kommunikationsverbindung stehen. Vorzugsweise können aufgrund der Signale der Steuereinheit Parameter eine Vakuumbox angepasst werden, um den Herstellprozess zu steuern. Die Putzwalze 31 kann dabei entlang der Förderrichtung 2 des Folienmaterials 1 verstellt werden, z.B. um die Oberfläche des Folienmaterials 1 in ihrer Qualität zu verbessern und/oder Partikel aus dem Prozess, insbesondere von dem Folienmaterial 1, zu entfernen. Auch die Positionierung der Putzwalze 31 kann beispielsweise auf Basis der Bewertung der ersten Temperatur 10 und/oder der zweiten Temperatur 11 erfolgen. Die Aufnahme der ersten und/oder zweiten Temperatur 10, 11 durch die Sensoreinheit 60 kann insbesondere gemäß einem der Ausführungsbeispiele der Figuren 5 oder 6 entlang einer Transportachse 33.1, um welche die Gießwalze 33 dreht, durchgeführt werden.

Figur 2 zeigt im zweiten Ausführungsbeispiel eine Sensoreinheit 60, die anstelle einer festen Bestimmungsposition eine variable Bestimmungsposition 41 aufweist. Dabei umfasst die Sensoreinheit 60 ein erstes Erfassungsmittel 61, welches an einer Trägereinheit 39 der Transportvorrichtung 30 angeordnet ist. Dabei kann die Trägereinheit 39 entlang eines Umfangs der Gießwalze 33 der Transportvorrichtung 30 verstellt werden, insbesondere entlang der Förderrichtung 2 des Folienmaterials 1. Dabei kann ferner die Sensoreinheit 60 und/oder die Trägereinheit 39 und/oder eine Putzwalze 31 mit einer Steuereinheit 70 insbesondere in drahtloser Kommunikationsverbindung stehen, sodass durch die Steuereinheit 70 eine temperaturabhängige Definition 20 einer Qualitätsbedingung der Folienqualität bereitgestellt werden kann. Wie bereits im ersten Ausführungsbeispiel erläutert, kann die Steuereinheit 70 mit einer Displayeinheit 32 in Verbindung stehen, sodass unterschiedliche Informationen auf der Displayeinheit 32 dargestellt werden können. So kann beispielsweise die erste Temperatur 10, die temperaturabhängige Definition 20 und/oder ein Hinweis, welcher aus einer Bewertung der ersten Temperatur 10 des Folienmaterials 1 folgt einem Benutzer visualisiert werden. Somit ist eine einfache Möglichkeit geschaffen, eine Überwachung einer Folienqualität bei der Herstellung der Kunststofffolie zu realisieren. Insbesondere kann das Bestimmen der ersten Temperatur 10 durch die Sensoreinheit 60 berührungslos, z.B. durch eine Infrarotkamera und/oder einen Ultraschallsensor, durchgeführt werden. Vorzugsweise entspricht die Bestimmung der ersten Temperatur 10 der Bestimmung der ersten Temperatur 10 eines der Ausführungsbeispiele der Figuren 5 oder 6.

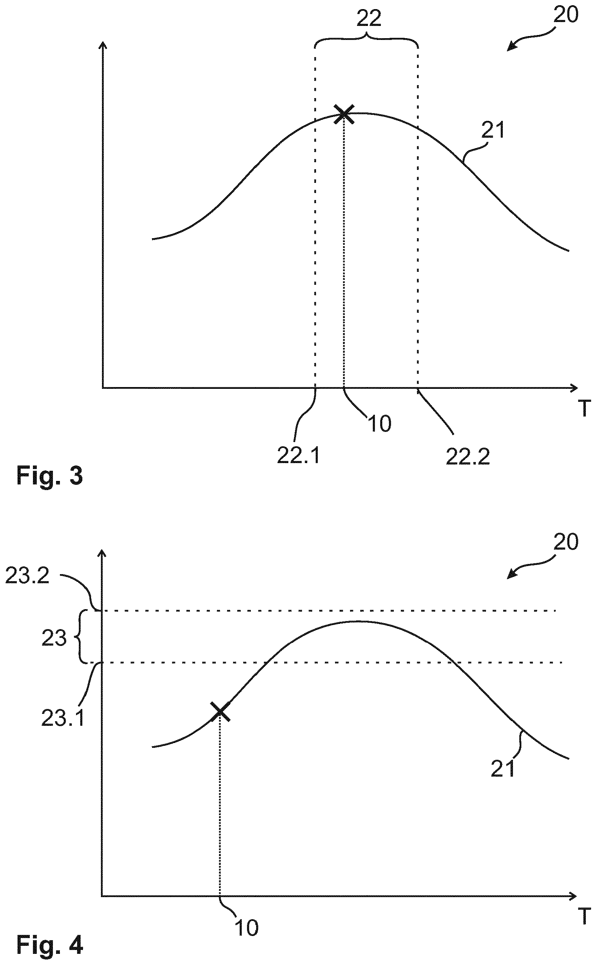

Gemäß Figur 3 ist ein Zusammenhang zwischen einer für die Weiterverarbeitung des Folienmaterials 1 relevante Eigenschaft 21 und einer Temperatur T des Folienmaterials, insbesondere für eine bestimmte Bestimmungsposition 41, dargestellt. Vorzugsweise kann die für die Weiterverarbeitung des Folienmaterials 1 relevante Eigenschaft 21 eine mechanische Eigenschaft, insbesondere ein Spannungs-Dehnungs-Verhalten und/oder ein Verformungsverhalten, der Kunststofffolie umfassen. Dabei kann für jede Temperatur T ein Wert der für die Weiterverarbeitung des Folienmaterials 1 relevanten Eigenschaft 21 bestimmt werden, sodass sich in der Gesamtbetrachtung eine Kurve ergibt. So kann beispielsweise gemäß der Vorgabe, dass ein bestimmter Wert der für die Weiterverarbeitung des Folienmaterials 1 relevanten Eigenschaft 21 erreicht werden soll, eine temperaturabhängige Definition 20 ein Temperaturintervall 22 umfassen, welches eine untere Temperaturintervallgrenze 22.1 und eine obere Temperaturintervallgrenze 22.2 aufweist. Wird nun beim Herstellprozess der Kunststofffolie eine erste Temperatur 10 des Folienmaterials 1 der Kunststofffolie an oder vor einer Transportvorrichtung 30 bestimmt, kann eine Bewertung der ersten Temperatur 10 des Folienmaterials 1 anhand der temperaturabhängigen Definition 20 der Qualitätsbedingung vorgenommen werden. Liegt die erste Temperatur 10, wie hier dargestellt, in dem Temperaturintervall 22, d. h. zwischen der unteren Temperaturintervallgrenze 22.1 und der oberen Temperaturintervallgrenze 22.2, kann die Bewertung positiv sein. Dadurch kann darauf geschlossen werden, dass zumindest mit einer hohen Wahrscheinlichkeit die für die Weiterverarbeitung des Folienmaterials 1 relevante Eigenschaft 21 der fertigen Kunststofffolie die Qualitätsbedingung, wie beispielsweise dass eine mechanische Eigenschaft oberhalb eines bestimmten Wertes liegen soll, erfüllt.

Figur 4 zeigt ferner ein weiteres Diagramm mit einer für die Weiterverarbeitung des Folienmaterials 1 relevanten Eigenschaft 21, welche Gegenüber einer Temperatur T eines Folienmaterials 1 aufgetragen ist. Vorzugsweise kann die für die Weiterverarbeitung des Folienmaterials 1 relevante Eigenschaft 21 eine mechanische Eigenschaft, wie z.B ein Spannungs-Dehnung-Verhalten und/oder ein Verformungsverhalten der Kunststofffolie umfassen. Anhand der Qualitätsbedingung kann dabei eine temperaturabhängige Definition 20 eine Bestimmung der für die Weiterverarbeitung des Folienmaterials 1 relevanten Eigenschaft 21 in Abhängigkeit von einer ersten Temperatur 10 umfassen. Dazu kann ein Eigenschaftsintervall 23 vorgesehen sein, in welchem gemäß der Qualitätsbedingung die für die Weiterverarbeitung des Folienmaterials 1 relevante Eigenschaft 21 liegen soll bzw. in welchem eine Zielgröße der für die Weiterverarbeitung des Folienmaterials 1 relevanten Eigenschaft 21 liegen soll. Anhand der temperaturabhängigen Definition 20 kann ferner für jeden Punkt der Temperatur T ein Wert der für die Weiterverarbeitung des Folienmaterials 1 relevanten Eigenschaft 21 ermittelt werden, sodass bei einer Bewertung der ersten Temperatur 10 des Folienmaterials 1 anhand der temperaturabhängigen Definition 20 festgestellt werden kann, ob die mechanische Eigenschaft, welche der ersten Temperatur 10 zugeordnet ist, in einem Eigenschaftsintervall 23, zusammengesetzt aus einer unteren Eigenschaftsintervallgrenze 23.1 und einer oberen Eigenschaftsintervallgrenze 23.2, liegt. Wie hier dargestellt, ergibt sich über die temperaturabhängige Definition 20, dass der Wert der für die Weiterverarbeitung des Folienmaterials 1 relevanten Eigenschaft 21, welcher der ersten Temperatur 10 zugeordnet ist, außerhalb des Eigenschaftsintervalls 23 liegt. Damit kann eine Bewertung der ersten Temperatur 10 des Folienmaterials 1 anhand der temperaturabhängigen Definition 20 der Qualitätsbedingung negativ ausfallen, so dass somit eine Anpassung von Prozessparametern zur Herstellung der Kunststofffolie bei gleichzeitigem Erfüllen der Qualitätsbedingung gesteuert und/oder geregelt werden kann. Insbesondere kann dazu ein Benutzer einen Hinweis erhalten oder dies kann automatisch durch eine Steuereinheit 70 ausgeführt werden.

Figur 5 zeigt ferner eine Transportvorrichtung 30 in schematischer Draufsicht. Dabei rotiert eine Gießwalze 33 der Transportvorrichtung 30 um eine Transportachse 33.1, um Folienmaterial 1 entsprechend entlang einer Förderrichtung 2, welche eine Umfangsrichtung 33.2 der Gießwalze 33 ist, zu bewegen und dabei abzukühlen. Dabei ist ferner eine Sensoreinheit 60 vorgesehen, welche ein erstes Erfassungsmittel 61, ein zweites Erfassungsmittel 62 und ein weiteres Erfassungsmittel 63 aufweist. Dabei sind die Erfassungsmittel 61, 62, 63 derart zur Gießwalze 33 angeordnet, dass eine erste Bestimmungsposition 41, eine zweite Bestimmungsposition 42 und eine weitere Bestimmungsposition 43 am Folienmaterial 1 überwachbar ist, sodass an den Bestimmungspositionen 41, 42, 43 jeweils eine Temperatur 10, 11 bestimmt werden kann. Die Bestimmungspositionen 41, 42, 43 sind dabei in einer axialen Richtung 3, parallel zur Transportachse 33.1 der Gießwalze 33, beabstandet, sodass der Stichprobenumfang erhöht ist. So kann zur Bestimmung einer ersten Temperatur 10 ein Mittelwert aus den an den Bestimmungspositionen 41, 42, 43 erfassten Temperaturen gebildet werden, sodass kleinere Abweichungen über die Breite der Gießwalze 33 herausgemittelt werden können oder es kann für jede Bestimmungsposition 41, 42, 43 eine einzelne Temperatur 10, 11, 12 ermittelt werden, um differenzierte Aussagen in axialer Richtung des Folienmaterials 1 zu erhalten.

Figur 6 zeigt eine Transportvorrichtung 30 mit einer Gießwalze 33 in schematischer Draufsicht. Dabei rotiert die Gießwalze 33 entsprechend des Ausführungsbeispiels der Figur 5 um eine Transportachse 33.1, um Folienmaterial 1 entlang einer Umfangsrichtung 33.2, welche einer Förderrichtung 2 des Folienmaterials 1 entspricht, zu befördern. Dabei ist ferner eine Sensoreinheit 60 vorgesehen, welches ein erstes Erfassungsmittel 61 aufweist. Das erste Erfassungsmittel 61 ist dabei dazu ausgebildet entlang einer axialen Richtung 3 der Gießwalze 33 bewegt zu werden, um von einer ersten Bestimmungsposition 41 zu einer zweiten Bestimmungsposition 42 und/oder zu einer weiteren Bestimmungsposition 43 bewegt zu werden. Dadurch kann ein einzelnes Erfassungsmittel 61 ausreichen, um mehrere Bestimmungspositionen 41, 42, 43 entlang der axialen Richtung 3 der Gießwalze 33 zu überwachen. Ferner wird eine erste Temperatur 10 bestimmt, welche anhand einer temperaturabhängigen Definition 20 bewertet wird. Durch die Erfassung der Temperatur 10 an mehreren Bestimmungspositionen 41, 42, 43 kann sichergestellt sein, dass die Qualitätsbedingung auch über die Breite des Folienmaterials 1, insbesondere nicht nur punktuell, erfüllt wird.

Figur 7 zeigt ein Diagramm, in welchem eine Temperatur T gegenüber einer axialen Richtung 3 einer Transportvorrichtung 30 aufgetragen ist. Die Temperatur T kann dabei beispielsweise durch eine Sensoreinheit, gemäß einem der Ausführungsbeispiele der Figuren 1, 2, 5, 6 oder 9 ausgebildet sein. Ferner ist eine erste Temperatur 10 dargestellt, welche über die axiale Richtung 3 des Folienmaterials 1 bestimmt wurde. Weiterhin ist ein Temperaturintervall 22 gezeigt, welches eine Qualitätsbedingung der Folienqualität des Folienmaterials 1 widerspiegelt. Eine Bewertung der ersten Temperatur 10 und/oder die temperaturabhängige Definition 20 kann dabei einen Mittelwert der ersten Temperatur 10 umfassen, sodass schließlich festgestellt werden kann, ob dieser Mittelwert innerhalb des Temperaturintervalls liegt oder nicht. Zusätzlich oder alternativ kann die Bewertung der ersten Temperatur 10 umfassen, dass festgestellt wird, ob die erste Temperatur 10 in einem Punkt in axialer Richtung 3 in dem Temperaturintervall 22 liegt oder das Temperaturintervall 22 verlässt. So kann das Temperaturintervall 22 entweder ein Intervall definieren, in welchem die Qualitätsbedingung als erfüllt angesehen wird oder ein Intervall, in welchem die Qualitätsbedingung als nicht erfüllt angesehen wird.

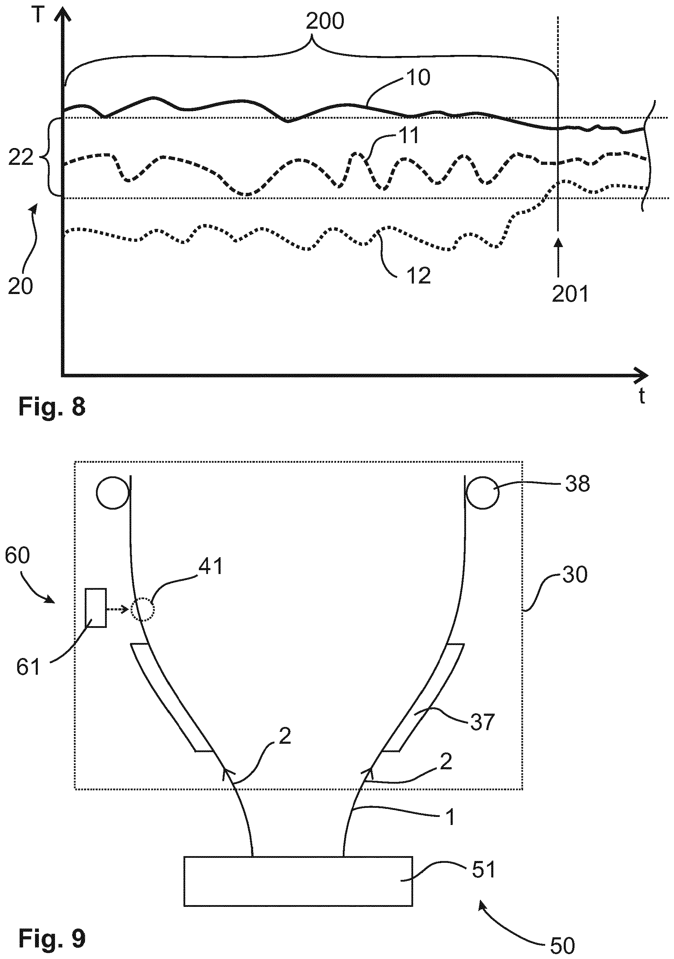

Figur 8 zeigt ferner ein Diagramm, in welchem eine Temperatur T gegenüber einer Zeit t aufgetragen ist. Dabei sind mehrere an einem Folienmaterial 1 gemessene Temperaturen 10, 11, 12 gezeigt, welche über die Zeit t veränderlich sind. Um eine Qualitätsbedingung des Folienmaterials 1 zu erfüllen, wird zunächst ein Justierungsprozess 200 gestartet, auf welchen ein Kalibrierungsprozess 201 folgt. Dadurch kann vorzugsweise zunächst der Prozess zur Herstellung der Kunststofffolie bzw. des Folienmaterials 1 eingestellt werden, woraufhin die temperaturabhängige Definition 20 der Qualitätsbedingung ermittelt oder neu ermittelt wird, sodass anschließend der eigentliche Herstellprozess innerhalb eines Temperaturintervalls 22 startet und auch die Bewertung entsprechend der Umgebungsbedingungen oder weiterer Toleranzen des Herstellprozesses durchgeführt werden kann. Die Ermittlung der temperaturabhängigen Definition 20 kann beispielsweise ein Entnehmen und Analysieren einer Probe des Folienmaterials 1 und/oder der Kunststofffolie umfassen, insbesondere wobei das Analysieren außerhalb einer Transportvorrichtung 30 vorgesehen ist.

Figur 9 zeigt zumindest einen Ausschnitt einer erfindungsgemäßen Folienmaschine 50 mit einer Vorrichtung zu Überwachung einer Folienqualität bei einer Herstellung, insbesondere einer Blasfolienherstellung, einer Kunststofffolie in einem ersten und einem zweiten Ausführungsbeispiel. Dabei wird Folienmaterial 1 aus einem Auslassmittel 51 der Folienmaschine 50 entlang einer Förderrichtung 2 befördert. Dabei weitet sich das Folienmaterial zu einer Blase auf und kühlt ab. Der wesentliche Teil der Abkühlung des Folienmaterials erfolgt dabei vor und/oder an einer Transportvorrichtung 30, welche ein Führungsmittel 38 und eine Kalibriervorrichtung 37 aufweist. Das Führungsmittel 38 ist vorzugsweise dazu ausgebildet das Folienmaterial 1 zu leiten und/oder im Vortrieb zu unterstützen. Die Kalibriervorrichtung 37 hält das Folienmaterial 1 ferner vorzugsweise in Form. Dabei kann die Kalibriervorrichtung 37 vorzugsweise vor oder nach dem Führungsmittel 38 angeordnet sein. Um eine erste Temperatur 10 des Folienmaterials 1 an einer ersten Bestimmungsposition 41 zu bestimmen ist eine Sensoreinheit 60 vorgesehen, welche ein erstes Erfassungsmittel 61 aufweist. Dabei ist die Sensoreinheit 60 vorzugsweise an der Transportvorrichtung 30 bzw. im Bereich der Transportvorrichtung 30 angeordnet. Hier kann eine für den laufenden Herstellprozess charakteristische Temperatur in Form der ersten Temperatur 10 bestimmt und über eine temperaturabhängige Definition 20 bewertet werden. Ferner kann die Sensoreinheit 60 vorzugsweise mit einer Steuereinheit 70 in Kommunikationsverbindung stehen, so dass über die Steuereinheit 70 eine Bewertung der ersten Temperatur 10 vorgenommen werden kann und insbesondere Prozessparameter angepasst werden können.

Die voranstehende Erläuterung der Ausführungsform beschreibt die vorliegende Erfindung ausschließlich im Rahmen der Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Folienmaterial
- 2: Förderrichtung
- 3: axiale Richtung
- 4: Schmelzefahne

- 10: erste Temperatur
- 11: zweite Temperatur
- 12: weitere Temperatur

- 20: temperaturabhängige Definition
- 21: mechanische Eigenschaft
- 22: Temperaturintervall
- 22.1: untere Temperaturintervallgrenze
- 22.2: obere Temperaturintervallgrenze
- 23: Eigenschaftsintervall
- 23.1: untere Eigenschaftsintervallgrenze
- 23.2: obere Eigenschaftsintervallgrenze

- 30: Transportvorrichtung
- 31: Putzwalze
- 32: Displayeinheit
- 33: Gießwalze
- 33.1: Transportachse
- 33.2: Umfangsrichtung
- 34: Aufnahmeort
- 35: Abzugsort
- 36: Abrisswalze
- 38: Führungsmittel
- 37: Kalibriervorrichtung
- 39: Trägereinheit
- 41: erste Bestimmungsposition
- 42: zweite Bestimmungsposition
- 43: weitere Bestimmungsposition

- 50: Folienmaschine
- 51: Auslassmittel
- 52: Gestell

- 60: Sensoreinheit
- 61: erstes Erfassungsmittel
- 62: zweites Erfassungsmittel
- 63: weiteres Erfassungsmittel

- 70: Steuereinheit

- 200: Justierungsprozess
- 201: Kalibrierungsprozess

## Patentansprüche

1. Verfahren zur Überwachung einer Folienqualität bei einer Herstellung, insbesondere einer Blasfolienherstellung oder einer Gießfolienherstellung, einer Kunststofffolie, aufweisend die folgenden Schritte:
- Bestimmen einer ersten Temperatur (10) eines Folienmaterials (1) der Kunststofffolie während eines Transportes des Folienmaterials (1), bei welchem das Folienmaterial (1) entlang einer Förderrichtung (2) des Folienmaterials (1) abkühlt,
- Bereitstellen einer temperaturabhängigen Definition (20) einer Qualitätsbedingung der Folienqualität,
- Bewerten der ersten Temperatur (10) des Folienmaterials (1) anhand der temperaturabhängigen Definition (20) der Qualitätsbedingung,
wobei das Bestimmen der ersten Temperatur (10) des Folienmaterials (1) der Kunststofffolie an einer Transportvorrichtung (30) erfolgt, wobei ein Erfassen einer zweiten Temperatur (11) an zumindest einer zweiten Bestimmungsposition (42) durchgeführt wird, wobei die erste und die zweite Bestimmungsposition (41, 42) in axialer Richtung (3) und/oder in Umfangsrichtung (33.2) der Transportvorrichtung (30) beabstandet sind, wobei für jede Bestimmungsposition (41, 42) eine einzelne temperaturabhängige Definition (20) einer Qualitätsbedingung der Folienqualität bereitgestellt und anhand der jeweiligen Temperatur (10, 11) an der jeweiligen Bestimmungsposition (41, 42) bewertet wird, wobei die Qualitätsbedingung und/oder die temperaturabhängige Definition (20) zumindest eine für die Weiterverarbeitung des Folienmaterials (1) relevante Eigenschaft (21) des Folienmaterials (1) und/oder der Kunststofffolie berücksichtigt, wobei die für die Weiterverarbeitung des Folienmaterials (1) relevante Eigenschaft (21) eine optische Eigenschaft des Folienmaterials (1) und/oder der Kunststofffolie umfasst.

2. Verfahren nach Anspruch 1,
**dadurch gekennzeichnet,**
**dass** die temperaturabhängige Definition (20) der Qualitätsbedingung ein Temperaturintervall (22) aufweist, wobei das Bewerten der ersten Temperatur (10) einen Vergleich des Temperaturintervalls (22) und der ersten Temperatur (10) umfasst.

3. Verfahren nach Anspruch 1,
**dadurch gekennzeichnet,**
**dass** die temperaturabhängige Definition (20) der Qualitätsbedingung zumindest eine Bestimmung der für die Weiterverarbeitung des Folienmaterials (1) relevanten Eigenschaft (21) in Abhängigkeit von der ersten Temperatur (10) umfasst.

4. Verfahren nach einem der Ansprüche 1 oder 3,
**dadurch gekennzeichnet,**
**dass** die für die Weiterverarbeitung des Folienmaterials (1) relevante Eigenschaft (21) eine mechanische Eigenschaft, insbesondere ein Spannungs-Dehnungs-Verhalten und/oder ein Verformungsverhalten, der Kunststofffolie umfasst.

5. Verfahren nach Anspruch 1,
**dadurch gekennzeichnet,**
**dass** das Bestimmen der ersten Temperatur (10) zumindest abschnittsweise in einer axialen Richtung (3) quer zur Förderrichtung (2) des Folienmaterials (1) auf der Transportvorrichtung (30) erfolgt.

6. Verfahren nach einem der vorhergehenden Ansprüche,
**dadurch gekennzeichnet,**
**dass** das Bestimmen der ersten Temperatur (10) berührungslos, insbesondere durch eine Ultraschallmessung und/oder eine Infrarotmessung, erfolgt.

7. Verfahren nach einem der vorhergehenden Ansprüche,
**dadurch gekennzeichnet,**
**dass** das Bestimmen der ersten Temperatur (10) an zumindest einer ersten Bestimmungsposition (41) durchgeführt wird, insbesondere dass die erste Bestimmungsposition (41) während oder nach der Bestimmung der ersten Temperatur (10) in einer axialen Richtung (3) und/oder in einer Umfangsrichtung (33.2) der Transportvorrichtung (30) verändert wird.

8. Verfahren nach einem der vorhergehenden Ansprüche,
**dadurch gekennzeichnet,**
**dass** auf Basis der Bewertung der ersten Temperatur (10) ein Hinweis zur Veränderung eines Prozessparameters an einen Benutzer gegeben wird.

9. Verfahren nach einem der vorhergehenden Ansprüche,
**dadurch gekennzeichnet,**
**dass** auf Basis der Bewertung der ersten Temperatur (10) ein Prozessparameter zur Herstellung der Kunststofffolie zur Anpassung der Folienqualität gesteuert und/oder geregelt wird.

10. Verfahren nach einem der vorhergehenden Ansprüche,
**dadurch gekennzeichnet,**
**dass** die für die Weiterverarbeitung des Folienmaterials (1) relevante Eigenschaft (21) und/oder die erste Temperatur (10) und/oder die temperaturabhängige Definition (20) über eine Displayeinheit (32) angezeigt wird.

11. Verfahren nach einem der vorhergehenden Ansprüche,
**dadurch gekennzeichnet,**
**dass** bevor der eigentliche Herstellungsprozess der Kunststofffolie gestartet wird, ein Justierungsprozess (200) so lange durchgeführt wird, bis die Bewertung der ersten Temperatur (10) des Folienmaterials (1) der Qualitätsbedingung genügt.

12. Verfahren nach einem der vorhergehenden Ansprüche,
**dadurch gekennzeichnet,**
**dass** nach dem Justierungsprozess (200) ein Kalibrierungsprozess (201) durchgeführt wird, wobei die temperaturabhängige Definition (20) der Qualitätsbedingung ermittelt oder neu ermittelt wird.

13. Folienmaschine (50) mit einer Vorrichtung zur Überwachung einer Folienqualität bei einer Herstellung einer Kunststofffolie mit
einem Auslassmittel (51), welches dazu ausgebildet ist, Folienmaterial (1) der Kunststofffolie an eine Transportvorrichtung (30) abzugeben, so dass das Folienmaterial (1) vor und/oder auf der Transportvorrichtung (30) abkühlt,
einer Sensoreinheit (60) zur Erfassung einer ersten Temperatur (10) des Folienmaterials (1) vor oder an der Transportvorrichtung (30) und einer Steuereinheit (70) zum Bereitstellen einer temperaturabhängigen Definition einer Qualitätsbedingung der Folienqualität und zum Bewerten der ersten Temperatur (10) des Folienmaterials (1) anhand der temperaturabhängigen Definition (20) der Qualitätsbedingung, wobei die Steuereinheit (70) zum Ausführen eines Verfahrens nach einem der vorhergehenden Ansprüche ausgebildet ist.

## Claims

1. A method for monitoring a film quality in a production, in particular a blown film production or a cast film production, of a plastic film, comprising the following steps:
- determining a first temperature (10) of a film material (1) of the plastic film during a transport of the film material (1), in which the film material (1) cools along a conveying direction (2) of the film material (1),
- providing a temperature-dependent definition (20) of a quality condition of the film quality,
- evaluating the first temperature (10) of the film material (1) on the basis of the temperature-dependent definition (20) of the quality condition,
wherein the determination of the first temperature (10) of the film material (1) of the plastic film takes place on a transport device (30), wherein a recording of a second temperature (11) is carried out at at least one second determination position (42), wherein the first and the second determination position (41, 42) are spaced apart in the axial direction (3) and/or in the circumferential direction (33.2) of the transport device (30), wherein for each determination position (41, 42) an individual, temperature-dependent definition (20) of a quality condition of the film quality is provided and is evaluated on the basis of the respective temperature (10, 11) at the respective determination position (41,42), wherein the quality condition and/or the temperature-dependent definition (20) takes into account at least one property (21) of the film material (1) and/or the plastic film relevant to the further processing of the film material (1), wherein the property (21) relevant to the further processing of the film material (1) comprises an optical property of the film material (1) and/or the plastic film.

2. The method according to claim 1,
**characterized in**
**that** the temperature-dependent definition (20) of the quality condition comprises a temperature interval (22), wherein the evaluation of the first temperature (10) comprises a comparison of the temperature interval (22) and the first temperature (10).

3. The method according to claim 1,
**characterized in**
**that** the temperature-dependent definition (20) of the quality condition comprises at least one determination of the property (21) relevant to the further processing of the film material (1) as a function of the first temperature (10).

4. The method according to any one of claims 1 or 3,
**characterized in**
**that** the property (21) relevant to the further processing of the film material (1) comprises a mechanical property, in particular a stress-strain behavior and/or a deformation behavior, of the plastic film.

5. The method according to claim 1,
**characterized in**
**that** the determination of the first temperature (10) takes place at least in sections in an axial direction (3) transverse to the conveying direction (2) of the film material (1) on the transport device (30).

6. The method according to any one of the preceding claims,
**characterized in**
**that** the determination of the first temperature (10) is carried out in a contactless manner, in particular by an ultrasonic measurement and/or an infrared measurement.

7. The method according to any one of the preceding claims
**characterized in**
**that** the determination of the first temperature (10) is carried out at at least one first determination position (41), in particular that the first determination position (41) is changed during or after the determination of the first temperature (10) in an axial direcetion (3) and/or in a circumferential direction (33.2) of the transport device (30).

8. The method according to any one of the preceding claims,
**characterized in**
**that**, on the basis of the evaluation of the first temperature (10) an indication for changing a process parameter is given to a user.

9. The method according to any one of the preceding claims,
**characterized in**
**that**, on the basis of the evaluation of the first temperature (10), a process parameter for the production of the plastic film is controlled and/or regulated for adaptation of the film quality.

10. The method according to any one of the preceding claims,
**characterized in**
**that** the property (21) relevant to further processing of the film material (1) and/or the first temperature (10) and/or the temperature-dependent definition (20) is displayed via a display unit (32).

11. The method according to any one of the preceding claims,
**characterized in**
**that** before the actual production process of the plastic film is started, an adjustment process (200) is carried out until the evaluation of the first temperature (10) of the film material (1) satisfies the quality condition.

12. Method according to one of the preceding claims,
**characterized in**
**that** a calibration process (201) is carried out after the adjustment process (200), wherein the temperature-dependent definition (20) of the quality condition is determined or newly determined.

13. A film machine (50) having a device for monitoring a film quality in the production of a plastic film having
an outlet means (51) which is designed to deliver film material (1) of the plastic film to a transport device (30) such that the film material (1) cools before and/or on the transport device (30),
a sensor unit (60) for detecting a first temperature (10) of the film material (1) before or at the transport device (30) and a control unit (70) for providing a temperature-dependent definition of a quality condition of the film quality and for evaluating the first temperature (10) of the film material (1) on the basis of the temperature-dependent definition (20) of the quality condition, wherein the control unit (70) is designed to carry out a method according to one of the preceding claims.

## Revendications

1. Procédé pour la surveillance de la qualité d'un film lors d'une fabrication, plus particulièrement lors de la fabrication d'un film soufflé ou lors de la fabrication d'un film coulé, d'un film en matière plastique, comprenant les étapes suivantes :
- détermination d'une première température (10) d'un matériau de film (1) du film en matière plastique pendant un transport du matériau de film (1), dans lequel le matériau de film (1) refroidit le long d'une direction de convoyage (2) du matériau de film (1),
- mise à disposition d'une définition en fonction de la température (20) d'une condition de qualité du film,
- évaluation de la première température (10) du matériau de film (1) à l'aide de la définition en fonction de la température (20) de la condition de qualité,
dans lequel la déterminante de la première température (10) du matériau de film (1) du film en matière plastique a lieu sur un dispositif de transport (30), dans lequel une mesure d'une deuxième température (11) est effectuée au niveau d'au moins une deuxième position de détermination (42), dans lequel les première et deuxième positions de détermination (41, 42) sont distantes, dans la direction axiale (3) et/ou dans la direction circonférentielle (33.2) du dispositif de transport (30), dans lequel, pour chaque position de détermination (41, 42), une définition spécifique en fonction de la température (20) d'une condition de qualité du film est mise à disposition et est évaluée à l'aide de la température respective (10, 11) au niveau de la position de détermination (41, 42) respective, dans lequel la condition de qualité et/ou la définition en fonction de la température (20) prend en compte au moins une propriété (21) du matériau du film (1), pertinente pour la suite du traitement du matériau du film (1) et/ou du film en matière plastique, dans lequel la propriété (21) pertinente pour la suite du traitement du matériau de film (1) comprend une propriété optique du matériau de film (1) et/ou du film en matière plastique.

2. Procédé selon la revendication 1,
**caractérisé en ce que**
la définition en fonction de la température (20) de la condition de qualité comprend un intervalle de température (22), dans lequel l'évaluation de la première température (10) comprend une comparaison de l'intervalle de température (22) et de la première température (10).

3. Procédé selon la revendication 1,
**caractérisé en ce que**
la définition en fonction de la température (20) de la condition de qualité comprend au moins une détermination de la propriété (21) pertinente pour la suite du traitement du matériau de film (1) en fonction de la première température (10).

4. Procédé selon la revendication 1 ou 3,
**caractérisé en ce que**
la propriété (21) pertinente pour la suite du traitement du matériau de film (1) comprend une propriété mécanique, plus particulièrement un comportement en contrainte et extension et/ou un comportement en déformation du film en matière plastique.

5. Procédé selon la revendication 1,
**caractérisé en ce que**
la détermination de la première température (10) a lieu, au moins à certains endroits, dans une direction axiale (3) transversale par rapport à la direction de convoyage (2) du matériau de film (1) sur le dispositif de transport (30).

6. Procédé selon l'une des revendications précédentes,
**caractérisé en ce que**
la détermination de la première température (10) a lieu sans contact, plus particulièrement à l'aide d'une mesure par ultrasons et/ou d'une mesure par infrarouge.

7. Procédé selon l'une des revendications précédentes,
**caractérisé en ce que**
la détermination de la première température (10) est effectuée au niveau d'au moins une première détermination (41), plus particulièrement **en ce que** la première position de détermination (41) est modifiée pendant ou après la détermination de la première température (10) dans une direction axiale (3) et/ou dans une direction circonférentielle (33.2) du dispositif de transport (30).

8. Procédé selon l'une des revendications précédentes,
**caractérisé en ce que**
sur la base de l'évaluation de la première température (10), une indication est donnée à l'utilisateur concernant la modification d'un paramètre du process.

9. Procédé selon l'une des revendications précédentes,
**caractérisé en ce que**
sur la base de l'évaluation de la première température (10), un paramètre du process de fabrication du film en matière plastique est contrôlé et/ou régulé afin d'adapter la qualité du film.

10. Procédé selon l'une des revendications précédentes,
**caractérisé en ce que**
la propriété (21) pertinente pour la suite du traitement du matériau de film (1) et/ou la première température (10) et/ou la définition en fonction de la température (20) est affichée à l'aide d'une unité d'affichage (32).

11. Procédé selon l'une des revendications précédentes,
**caractérisé en ce que**
avant le démarrage du process de fabrication proprement dit du film en matière plastique, un processus d'ajustement (200) est effectué jusqu'à ce que l'évaluation de la première température (10) du matériau de film (1) respecte la condition de qualité.

12. Procédé selon l'une des revendications précédentes,
**caractérisé en ce que**
après le processus d'ajustement (200), est effectué un processus d'étalonnage (201), dans lequel la définition en fonction de la température (20) de la condition de qualité est déterminée ou re-déterminée.

13. Machine à film (50) avec un dispositif pour la surveillance de la qualité du film lors de la fabrication d'un film en matière plastique, avec
un moyen de sortie (51) qui est conçu pour transférer le matériau de film (1) du film en matière plastique sur un dispositif de transport (30) de sorte que le matériau de film (1) refroidisse avant et/ou sur le dispositif de transport (30),
une unité de capteur (60) pour la mesure d'une première température (10) du matériau de film (1) avant ou au niveau du dispositif de transport (30) et une unité de commande (70) pour la mise à disposition d'une définition en fonction de la température d'une condition de qualité du film et pour l'évaluation de la première température (10) du matériau de film (1) à l'aide de la définition en fonction de la température (20) de la condition de qualité, dans lequel l'unité de commande (70) est conçue pour exécuter un procédé selon l'une des revendications précédentes.
